# FASCICULE DE BREVET EUROPEEN

(11) **EP 0 948 903 B1**
(45) Date de publication et mention de la délivrance du brevet: **30.07.2003**
(21) Numéro de dépôt: 98201083.7
(22) Date de dépôt: 08.04.1998
(51) Int. Cl.: A23L 1/00, A23B 7/05, A23L 1/0522, A23P 1/16, A23L 1/212, A23L 1/39

(54) **Produit culinaire crémeux surgelé**
Tiefgekühltes cremiges kulinarisches Erzeugnis
Frozen creamy culinary product

(43) Date de publication de la demande: 13.10.1999
(73) Titulaire: SOCIETE DES PRODUITS NESTLE S.A., 1800 Vevey (CH)
(72) Inventeur: Moreau, Jean, 60000 Beauvais (FR); Marjanovic, Nicolas, 60000 Beauvais (FR); Morand, Alfred, 60112 Milly sur Therain (FR)
(74) Mandataire: Wavre, Claude-Alain

(56) Documents cités:
- EP-A- 0 713 650
- EP-A- 0 826 314
- AU-A- 543 003
- DD-A- 290 251
- GB-A- 2 267 207
- US-A- 5 264 235
- C.FERRERO ET AL.: "Stability of frozen starch pastes:effect of freezing,storage and xanthan gum addition" JOURNAL OF FOOD PROCESSING AND PRESERVATION, vol. 17, - 1993 pages 191-211, XP000431231 trumbull,ct,us

## Description

La présente invention a pour objet un produit culinaire crémeux surgelé et son procédé de fabrication.

US5264235 (Duckworth M./CAMPBELL FROZEN FOODS) décrit un produit culinaire surgelé de type potage crémeux consommable après chauffage aux microondes et obtenu par mélange d'huile, amidon, maltodextrine et eau, chauffage du mélange jusqu'à gonflement partiel de l'amidon, conditionnement en récipients individuels et congélation.

EP0713650 (SOCIETE DES PRODUITS NESTLE) décrit un dispositif de fabrication de produits congelés aérés de type crème glacée ou sorbet comprenant une double vis tournant dans un fourreau à double paroi refroidi par circulation d'un fluide frigorigène, et des conduits d'injection de gaz prévus dans une zone intermédiaire du fourreau.

DD290251 (VEB KERAMISCHE WERKE) décrit un procédé de refroidissement d'un produit culinaire pâteux ou sous forme de purée à l'aide d'un dispositif comprenant une vis de transport à axe creux tournant dans un fourreau à double paroi, un fluide frigorigène circulant dans l'axe et le fourreau, le produit étant refroidi dans ce dispositif jusqu'au voisinage de son point de congélation et étant ensuite découpé en morceaux avant d'être congelé.

La présente invention a pour but de proposer un produit culinaire crémeux surgelé d'une texture particulièrement onctueuse après décongélation et un procédé industriel particulièrement efficace de fabrication d'un tel produit.

A cet effet, le produit culinaire surgelé selon la présente invention présente une teneur en eau de 60-85% en poids et comprend, en % en poids, 4-12% de matière grasse, 2-10% d'amidon prégélatinisé hydraté et 2,5-4% d'amidon prégélatinisé déshydraté.

Dans le procédé selon la présente invention, on traite un mélange comprenant de l'amidon, de l'eau et de la matière grasse de manière à prégélatiniser et/ou gonfler l'amidon, on y ajoute de l'amidon prégélatinisé déshydraté, on congèle le mélange en continu jusqu'à une température comprise entre -8°C et -3°C, on le découpe et/ou on le façonne en morceaux et/ou portions que l'on surgèle.

Le produit selon la présente invention présente une texture en bouche particulièrement onctueuse après décongélation. De manière surprenante, il présente une texture maléable après un chauffage relativement bref aux microondes, notamment après environ 30-120 s et dès qu'il a atteint une température comprise entre environ -5°C et 0°C.

Le présent procédé permet une fabrication industrielle efficace de produits culinaires crémeux surgelés de type sauces ou mousses présentés sous forme de morceaux et/ou portions.

Dans le présent produit, la matière grasse peut être une huile alimentaire animale ou végétale telle qu'une huile d'arachide, de tournesol, d'olive, de palme ou de beurre, ou une matière grasse solide mais tartinable à température ambiant telle que le beurre ou une margarine, ou leurs mélanges, par exemple.

L'amidon peut provenir de tout féculent alimentaire, notamment d'une céréale telle que le blé ou le maïs, ou d'un légume à tubercules tel que la pomme de terre ou l'igname, par exemple.

L'amidon prégélatinisé hydraté peut être un amidon natif ou modifié chimiquement ou physiquement, que l'on a prégélatinisé ou précuit et/ou gonflé dans de l'eau bouillante entrant ensuite dans la composition du présent produit, par exemple.

L'amidon prégélatinisé déshydraté peut être un amidon natif ou modifié chimiquement ou physiquement, qui a subi une prégélatinisation ou précuisson suivie d'une déshydratation, par exemple.

Le présent produit peut comprendre en outre, en % en poids, jusqu'à 10% de solides non gras du lait, jusqu'à 60% de pulpe de légume, jusqu'à 5% de solides du blanc ou du jaune d'oeuf, jusqu'à 5% d'épices et du sel, par exemple.

Le présent produit peut présenter un degré de foisonnement (augmentation de volume par rapport à la masse non foisonnée) de environ 40-120% en volume, par exemple.

Dans le présent procédé, on traite donc un mélange d'amidon, de matière grasse et d'eau de manière à gélatiniser et/ou gonfler l'amidon. On peut traiter ainsi un mélange tel qu'il n'incorpore qu'une partie, notamment une partie d'huile, de la matière grasse prévue dans le produit final, une autre partie de cette matière grasse, notamment une partie de beurre ou de margarine, pouvant être ajoutée au mélange après ce traitement.

Si l'amidon est natif ou modifié mais pas prégélatinisé, on peut réaliser ce traitement par chauffage à une température supérieure à la température de gélatinisation de l'amidon, notamment à une température de 80-100°C, durant un temps suffisant pour obtenir la gélatinisation de l'amidon, notamment durant 2-30 min, par exemple.

Si l'amidon est prégélatinisé et déshydraté, on peut réaliser ce traitement par simple agitation du mélange à température ambiante, notamment à 15-35°C, durant un temps suffisant pour que l'amidon gonfle en réabsorbant une quantité d'eau comparable à celle qu'il a perdue lors de sa déshydratation après prégélatinisation, notamment durant 2-30 min, par exemple.

On ajoute donc au mélange traité de l'amidon prégélatinisé déshydraté. Cet amidon prégélatinisé déshydraté peut être un amidon natif ou modifié chimiquement ou physiquement, qui a subi une prégélatinisation ou précuisson suivie d'une déshydratation, par exemple.

On ajoute au mélange traité cet amidon prégélatinisé déshydraté en quantité adéquate, à raison de 2,5-4% en poids, pour conférer au présent produit la viscosité finale désirée qu'il pourra acquérir durant la décongélation.

On peut congeler le mélange en continu à l'aide d'un appareil capable de brasser et transporter le mélange sur et le long d'une surface refroidie par circulation d'un fluide frigorigène, et muni d'un dispositif d'injection de gaz pour le foisonnement, tel qu'un échangeur de chaleur à surface raclée ou un extrudeur de l'industrie des crèmes glacées, par exemple.

On congèle donc ainsi le mélange jusqu'à une température comprise entre -8°C et -3°C, à savoir une température où le mélange est encore maléable ou façonnable.

On peut foisonner le mélange durant la congélation par injection dans le mélange d'un gaz inerte ou non tel que l'air, l'oxygène, l'azote et/ou le gaz carbonique, jusqu'à un degré de foisonnement d'environ 40-120% en volume, par exemple.

Durant cette étape de congélation en continu, la structure de l'amidon gélatinisé et/ou gonflé peut être au moins partiellement détruite par un cisaillement exercé sur le mélange lors de son brassage et transport sur et le long d'une surface refroidie. La perte de viscosité qui peut en résulter est contrebalancée par un gain en onctuosité, qui s'ajoute à la douceur en bouche conférée par la matière grasse.

Cette perte de viscosité peut également être compensée par l'addition d'amidon prégélatinisé déshydraté au début du processus de congélation, cet amidon pouvant échapper au cisaillement lors de la congélation du fait qu'il n'est pas gonflé ou imbibé d'eau au début et qu'il n'a pas le temps de gonfler au cours du processus de congélation, mais cet amidon pouvant développer de la viscosité par la suite, lors de la décongélation du produit, ou lors de sa régénération (sauce chaude).

Le mélange ainsi congelé peut être débité en continu sous forme d'un boudin ou ruban que l'on peut découper et/ou façonner en morceaux et/ou portions à l'aide d'un dispositif de découpage tel qu'un fil de découpe et/ou un dispositif de façonnage comprenant des alvéoles de moulage ou des conditionnements individuels ou collectifs de forme désirée, par exemple.

On peut alors surgeler les morceaux et/ou portions, notamment dans leur conditionnement individuel ou collectif, jusqu'à une température de surgélation traditionnelle telle qu'une température inférieure ou égale à -20°C, par exemple.

On peut décongeler le présent produit de toute manière connue de la ménagère.

Cependant, le présent produit se prête particulièrement bien à une décongélation aux microondes car il peut présenter déjà une texture maléable, qui permet d'en préparer des portions à la cuiller, après un temps aussi bref qu'environ 30-120 s, alors qu'il n'atteint encore qu'une température voisine de la décongélation, notamment une température d'environ -5°C à 0°C, par exemple.

Les exemples ci-après illustrent quelques formes de réalisation du présent produit et du présent procédé de fabrication. Dans ces exemples, les pourcentages et parties sont donnés en poids sauf indication contraire.

### Exemple 1 (non compris dans l'objet revendiqué)

On prépare une sauce blanche de type Béchamel surgelée.

A cet effet, on prépare un mélange présentant la composition suivante, en % en poids:

| | |
|---|---|
| Amidon modifié non gélatinisé* | 8% |
| Huile de tournesol | 8% |
| Lait écrémé en poudre | 8% |
| Sel fin | 0,5% |
| Eau | Complément à 98% |

Amidon de maïs modifié commercialisé par la compagnie National Starch sous le nom de Colflo 67.

On traite le mélange par chauffage sous agitation jusqu'à 95°C et maintien à cette température durant 3 min.

On ajoute au mélange 2% d'un amidon prégélatinisé déshydraté (Amidon de maïs commercialisé par la compagnie National Starch sous le nom d'Ultrasperce 5), en introduisant en parallèle le mélange traité et l'amidon prégélatinisé déshydraté dans l'entrée d'un extrudeur bivis de type BC 21 fabriqué par la maison CLEXTRAL.

L'extrudeur est équipé de neuf éléments permettant la congélation du produit par circulation d'alcool refroidi à -40°C.

Le mélange ressort de l'appareil sous forme de boudins extrudés présentant une température de -3°C et une texture de crème glacée. On le façonne en portions famille en en remplissant des gobelets en carton plastifié et on le surgèle à -20°C.

Le produit décongelé aux microondes présente après environ 30 s une température de -4°C et une texture maléable qui permet de le doser à la cuiller.

Le produit porté à une température de consommation chaude présente une texture lisse, crémeuse et plus onctueuse que celle que l'on peut obtenir en préparant une sauce béchamel à partir des mêmes ingrédients frais.

### Exemple 2 (non compris dans l'objet revendiqué)

On prépare une mousse de carotte et céleri surgelée.

A cet effet, on prépare un mélange présentant la composition suivante, en % en poids:

| | |
|---|---|
| Pulpe de carotte et céleri | 55% |
| Huile de tournesol | 4% |
| Huile de beurre | 4% |
| Amidon modifié non gélatinisé* | 5% |
| Blanc d'oeuf en poudre | 1% |
| Concentré de citron | 0,5% |
| Epices et sucre | 3% |
| Eau | Complément à 99% |

| | |
|---|---|
| *Amidon de maïs modifié commercialisé par la compagnie National Starch sous le nom de Colflo 67. | |

Pour ce faire, on mélange d'abord l'amidon, l'eau et l'huile, on traite ce mélange par chauffage sous agitation jusqu'à 95°C et maintien à cette température durant 3 minutes et on y ajoute les autres ingrédients.

On ajoute au mélange 1% d'un amidon prégélatinisé déshydraté (Amidon de maïs commercialisé par la compagnie National Starch sous le nom d'Ultrasperce 5), lors de son introduction dans le même extrudeur que celui décrit à l'exemple 1.

Durant la congélation du mélange dans l'extrudeur, on le foisonne par injection d'azote jusqu'à un degré de foisonnement de 60 %.

Le mélange ressort de l'appareil sous forme forme de boudins extrudés foisonnés présentant une température de -7°C et une texture de crème glacée. On le façonne en portions individuelles en en remplissant des gobelets en carton plastifié et on le surgèle à -20°C.

Après 30-45 s de décongélation aux microondes, le produit présente une température de -5°C et une texture aérée maléable, crémeuse et agréable en bouche.

### Exemple 3 (non compris dans l'objet revendique)

On prépare une pâte d'anchois surgelée.

A cet effet, on prépare un mélange présentant la composition suivante, en % en poids:

| | |
|---|---|
| Pulpe de tomate et pâte d'anchois | 50% |
| Margarine | 6% |
| Huile de beurre | 6% |
| Amidon modifié non gélatinisé* | 8% |
| Eau | Complément à 99% |

| | |
|---|---|
| *Amidon de maïs modifié commercialisé par la compagnie National Starch sous le nom de Colflo 67. | |

Pour ce faire, on mélange d'abord l'amidon, l'eau et l'huile, on traite ce mélange par chauffage sous agitation jusqu'à 95°C et maintien à cette température durant 5 min et on y ajoute les autres ingrédients.

On ajoute au mélange 1% d'un amidon prégélatinisé déshydraté (Amidon de maïs commercialisé par la compagnie National Starch sous le nom d'Ultrasperce 5), lors de son introduction dans le même extrudeur que celui décrit à l'exemple 1.

Durant la congélation du mélange dans l'extrudeur, on le foisonne par injection d'azote jusqu'à un degré de foisonnement de 40%.

Le mélange ressort de l'appareil sous forme forme de boudins extrudés foisonnés présentant une température de -5°C et une texture de crème glacée. On le façonne en portions ménage en en remplissant des gobelets en carton plastifié et on le surgèle à -20°C.

Après 30 s de décongélation aux microondes, le produit présente une température de -4°C et une texture aérée maléable, tartinable et agréable en bouche.

## Revendications

1. Produit culinaire crémeux surgelé présentant une teneur en eau de 60-85% en poids et comprenant, en % en poids, 4-12% de matière grasse, 2-10% d'amidon prégélatinisé non déshydraté et 2,5-4% d'amidon prégélatinisé déshydraté.

2. Produit selon la revendication 1, comprenant en outre, en % en poids, jusqu'à 10% de solides non gras du lait, jusqu'à 60% de pulpe de légume, jusqu'à 5% de solides du blanc ou du jaune d'oeuf, jusqu'à 5% d'épices, et du sel.

3. Produit selon la revendication 1, présentant un degré de foisonnement de 40-120% en volume.

4. Procédé de fabrication d'un produit culinaire crémeux surgelé selon la revendication 1, dans lequel on traite un mélange d'amidon, de matière grasse et d'eau de manière à prégélatiniser l'amidon, on y ajoute de l'amidon prégélatinisé déshydraté, on congèle le mélange en continu jusqu'à une température comprise entre -8°C et -3°C, on le découpe et/ou on le façonne en morceaux et/ou portions que l'on surgèle.

5. Procédé selon la revendication 4, dans lequel on traite un mélange d'amidon natif ou modifié mais pas prégélatinisé, de matière grasse et d'eau par chauffage à une température de 80-100°C durant 2-30 min.

6. Procédé selon la revendication 4, dans lequel on traite un mélange d'amidon prégélatinisé et déshydraté, de matière grasse et d'eau par agitation du mélange à 15-35°C durant 2-30 min.

## Patentansprüche

1. Tiefgefrorenes cremiges kulinarisches Erzeugnis mit einem Wassergehalt von 60-85 Gew.-%, das in Gew.-% 4-12% Fett, 2-10% nicht-dehydratisierte vorgelierte Stärke und 2,5-4% dehydratisierte vorgelierte Stärke aufweist.

2. Erzeugnis nach Anspruch 1, das außerdem in Gew.-% bis zu 10% Nichtfett-Feststoffe der Milch, bis zu 60% Gemüsepülpe, bis zu 5% Eiweiß- oder Eigelb-Feststoffe, bis zu 5% Gewürze sowie Salz aufweist.

3. Erzeugnis nach Anspruch 1, das einen Volumenserweiterungsgrad von 40-120 Vol.-% besitzt.

4. Verfahren zur Herstellung eines tiefgefrorenen cremigen kulinarischen Erzeugnisses nach Anspruch 1, bei dem man eine Mischung von Stärke, Fett und Wasser so behandelt, daß die Stärke vorgeliert wird, ihr dehydratisierte vorgelierte Stärke zusetzt, die Mischung kontinuierlich bis zu einer Temperatur zwischen -8°C und -3C° eingefriert, sie zerschneidet und/oder sie zu Stücken und/oder zu Portionen formt, die man tiefgefriert.

5. Verfahren nach Anspruch 4, bei dem man eine Mischung aus nativer oder modifizierter, aber nicht vorgelierter Stärke, Fett und Wasser durch Erhitzen auf eine Temperatur von 80-100°C während 2-30min mischt.

6. Verfahren nach Anspruch 4, bei dem man eine Mischung aus vorgelierter und dehydratisierter Stärke, Fett und Wasser durch Rühren der Mischung während 2-30min bei 15-35°C behandelt.

## Claims

1. A frozen creamy culinary product having a water content of 60-85 wt.% and comprising, in weight percent, 4-12% of fats, 2-10% of non-dehydrated, pregelatinised starch and 2.5-4% of dehydrated, pregelatinised starch.

2. A product according to claim 1, additionally comprising, in weight percent, up to 10% of non-fat milk solids, up to 60% of vegetable pulp, up to 5% of egg white or egg yolk solids, up to 5% of spices and salt.

3. A product according to claim 1, exhibiting a degree of expansion of 40-120% by volume.

4. A process for the production of a frozen creamy culinary product according to claim 1, in which a mixture of starch, fat and water is treated so as to pregelatinise the starch, the dehydrated, pregelatinised starch is added, the mixture is continuously frozen down to a temperature of between -8°C and -3°C and is chopped and/or shaped into pieces and/or portions which are deep-frozen.

5. A process according to claim 4, in which a mixture of native or modified but unpregelatinised starch, fat and water is treated by heating to a temperature of 80-100°C for 2-30 minutes.

6. A process according to claim 4, in which a mixture of pregelatinised and dehydrated starch, fat and water is treated by stirring the mixture at 15-35°C for 2-30 minutes.
